# EUROPÄISCHE PATENTSCHRIFT

(11) **EP 1 876 069 B1**
(45) Veröffentlichungstag und Bekanntmachung des Hinweises auf die Patenterteilung: **09.01.2013**
(21) Anmeldenummer: 07075920.4
(22) Anmeldetag: 28.10.2002
(51) Int. Cl.: B60R 21/16

(54) **Airbaganordnung**
Airbag assembly
Agencement d'airbag

(30) Priorität: 02.11.2001 DE 10155357; 19.12.2001 DE 10164519; 29.04.2002 DE 20207388 U
(43) Veröffentlichungstag der Anmeldung: 09.01.2008
(62) Teilanmeldung aus: 02792586.6
(73) Patentinhaber: Takata AG, 63743 Aschaffenburg (DE)
(72) Erfinder: Heuschmid, Rainer, 89075 Ulm (DE); Rasch, Georg, 89346 Bibertal-Bühl (DE); Feller, Jens, 89171 Illerkirchberg (DE); Dierks, Uwe, 89143 Blaubeuren (DE)
(74) Vertreter: Müller, Wolfram Hubertus

(56) Entgegenhaltungen:
- DE-A1- 10 018 170
- DE-U1- 20 105 734
- US-A- 6 059 312
- US-A1- 2001 007 391

## Beschreibung

Die Erfindung betrifft eine Airbaganordnung nach dem Oberbegriff des Anspruchs 1.

Eine derartige Airbaganordnung umfaßt einen Gassack; einen Gasgenerator zum Aufblasen des Gassackes; eine innerhalb des Gassackes angeordnete flexible Kammer, in die das aus dem Gasgenerator ausströmende Gas eintritt und die mindestens eine Ausströmöffnung aufweist, durch die hindurch das Gas weiter einen Arbeitsraum des Gassackes geleitet wird; sowie mindestens eine Entlüftungsöffnung, durch die hindurch Gas aus dem Gassack in die Umgebung austreten kann.

Der Gassack einer derartigen Airbaganordnung dient zum Schutz von Fahrzeuginsassen in einem Crash-Fall, wozu der Gassack mittels des Gasgenerators innerhalb von einigen Millisekunden aufgeblasen wird, um für einen zu schützenden Insassen ein Kissen zu bilden, auf das der Insasse aufprallen kann. Da sich ein Fahrzeuginsasse während der Fahrt nicht stets in seiner normalen (aufrechten) Sitzposition befindet, sondern beispielsweise in Richtung auf die Airbaganordnung vorgebeugt bzw. seitlich gebeugt sein kann, ist es notwendig, das Verletzungsrisiko für einen Insassen durch den sich schnell entfaltenden Gassack zu minimieren. Hierzu dient insbesondere die Steuerung des Gasstromes, der zum definierten Befüllen des Gassackes aus dem zugeordneten Gasgenerator der Airbaganordnung austritt.

Aus der WO 99/28163 A1 ist eine Vorrichtung zur Beeinflussung der Entfaltung eines Gassackes eines Airbagmoduls bekannt, bei der innerhalb des Gassackes im Bereich des Gasgenerators ein Kanal mit einander gegenüberliegenden, stirnseitigen Ausströmöffnungen für die Beeinflussung des ausströmenden Gases nach Zündung des Gasgenerators angeordnet ist. Dieser Kanal kann insbesondere durch ein innerhalb des Gassackes angeordnetes Fangband gebildet werden. Bei dem Führungskanal handelt es sich also um eine flexible Kammer, in die das aus dem Gasgenerator ausströmende Gas zunächst eintritt und mittels der das Gas in definierten, vorbestimmten Richtungen in den Gassack eingeleitet wird. Hierdurch kann die Gasströmung innerhalb des Gassackes derart beeinflußt werden, dass die Belastung eines beim Aufblasen des Gassackes außerhalb seiner Normalposition befindlichen Insassen (sogenannter oop-Fall) reduziert wird. Auch aus US-A-6059312 ist eine Vorrichtung eines Airbagmoduls bekannt.

Der Erfindung liegt das Problem zugrunde, eine Airbaganordnung der eingangs genannten Art weiter zu verbessern.

Dieses Problem wird erfindungsgemäß durch die Schaffung einer Airbaganordnung mit den Merkmalen des Anspruchs 1 gelöst.

Danach ist die Entlüftungsöffnung derart angeordnet, dass Gas aus der flexiblen Kammer zu der Entlüftungsöffnung gelangt, ohne die Ausströmöffnungen der flexiblen Kammer zu passieren, und zwar vorzugsweise ausschließlich in der Weise, dass das Gas die Ausströmöffnungen hierbei nicht passiert.

Da die aus dem Gasgenerator ausströmenden Gase zunächst in die flexible Kammer gelangen, die innerhalb des Gassackes angeordnet ist und deren Volumen deutlich kleiner ist als das Gassackvolumen insgesamt, entsteht in der flexiblen Kammer beim Aufblasen des Gassackes ein sehr hoher Druck; der deutlich über dem Innendruck des sich füllenden Gassackes liegt. Aufgrund dieses sehr hohen Druckes, der auf die Wände der flexiblen Kammer wirkt, kommt es zu einer entsprechend starken Gasströmung durch die Entlüftungsöffnung hindurch in den Außenraum (Gassackumgebung).

Die erfindungsgemäße Lösung hat den Vorteil, dass der sich innerhalb der flexiblen Kammer aufbauende, sehr große Druck genutzt werden kann, um ein beschleunigtes Abströmen von Gas aus dem Gassack heraus in die Umgebung zu erreichen. Dieser Effekt wird natürlich dadurch verstärkt, wenn die Entfaltung des Gassackes durch einen außerhalb seiner Normalposition befindlichen Insassen behindert wird. Hierdurch wird die Belastung eines Insassen beim Aufprall auf den Luftsack in einem oop-Fall gemildert.

So werden die zueinander in Widerspruch stehenden Anforderungen in Einklang gebracht, dass ein Gassack in einem Crash-Fall einerseits sehr schnell und möglichst großvolumig aufgeblasen werden soll und dass andererseits in einem oop-Fall die Gefährdung des Insassen durch den sich entfaltenden Gassack minimiert werden soll.

Gemäß der erfindungsgemäßen Lösung wird der sich in der flexiblen Kammer aufbauende Druck einerseits dazu genutzt, um den Gassack (durch die hierfür vorgesehenen Ausströmöffnungen der flexiblen Kammer hindurch) möglichst schnell in definierter Richtung mit Gas zu befüllen, was ein entsprechend schnelles Entfalten des Gassackes zur Folge hat, und andererseits bewirkt der erhöhte Druck innerhalb der flexiblen Kammer wegen der erfindungsgemäß vorgesehenen Anordnung der Entlüftungsöffnung ein schnelleres Abströmen von Gas in die Umgebung, so dass gleichzeitig die Belastung eines auf den Gassack aufprallenden Fahrzeuginsassen reduziert werden kann.

Dies wird dadurch erreicht, dass aus dem Gasgenerator in die flexible Kammer des Gassackes eintretendes Gas durch die Entlüftungsöffnung nach außen Abströmen kann ohne zuvor in einen außerhalb der flexiblen Kammer gelegenen Bereich des Gassackes (den sogenannten Arbeitsbereich des gassakkes) geströmt zu sein. Hierzu wird die Entlüftungsöffnung vorteilhaft in einer Wand der flexiblen Kammer angeordnet.

Zur Abgrenzung der flexiblen Kammer gegenüber den übrigen Bereichen innerhalb des Gassackes, also insbesondere dem Arbeitsbereich, der dem Schutz eines Insassen in einem Crash-Fall dient, kann eine innerhalb des Gassackes angeordnete flexible Hülle verwendet werden.

Gemäß einer Ausführungsform bildet diese flexible Hülle sämtliche Wände der flexiblen Kammer, umschließt als die Kammer - abgesehen von den Ausströmöffnungen - vollständig. Gemäß einer anderen Ausführungsform werden die Wände der flexiblen Kammer teilweise durch die innerhalb des Gassackes angeordnete flexible Hülle und teilweise durch die Hülle des Gassackes selbst gebildet.

Je nach Gestaltung der inneren flexiblen Hülle kann die Entlüftungsöffnung einerseits ausschließlich durch eine Öffnung in der Hülle des Gassackes und andererseits durch miteinander korrespondierende, der Entlüftung dienende Öffnungen in der flexiblen Hülle einerseits und der Hülle des Gassackes andererseits gebildet werden. Im letztgenannten Fall sind die Öffnungen in der flexiblen Hülle einerseits und in der Hülle des Gassackes andererseits derart anzuordnen, dass durch die Öffnung in der flexiblen Hülle hindurch Gas aus der flexiblen Kammer zu der korrespondierenden Öffnung in der Hülle des Gassackes gelangt, ohne die Ausströmöffnungen der flexiblen Kammer zu passieren (durch die hindurch das Gas in den Arbeitsbereich des Gassackes strömen würde).

Die der Entlüftung dienende Öffnung in der inneren flexiblen Hülle und die zugeordnete Öffnung in der Hülle des Gassackes korrespondieren vorzugsweise derart miteinander, dass sie im aufgeblasenen Zustand der flexiblem Kammer bzw. im aufgeblasenen Zustand des Gassackes insgesamt eine einheitliche Entlüftungsöffnung bilden. Hierzu können die beiden Öffnungen einander überdecken, z. B. indem sie miteinander fluchten.

Um eine definierte Positionierung jeder der Entlüftung dienenden Öffnung der flexiblen Hülle zu der jeweils zugeordneten Öffnung des Gassackes zu erreichen, können zusätzliche Positioniermittel vorgesehen sein, z. B. indem die flexible Kammer und der Gassack im Bereich der einander zugeordneten Öffnungen miteinander verbunden, insbesondere vernäht sind.

Die Entlüftungsöffnung weist vorzugsweise einen solchen Querschnitt auf, dass durch die aus der Entlüftungsöffnung austretenden Gase ein explosionsartiges Befüllen des Gassackes innerhalb einiger Millisekunden nicht möglich wäre. Mit anderen Worten ausgedrückt, ist hiernach der durch die Entlüftungsöffnung nach außen abströmende Anteil des gesamten Gasstromes erheblich geringer, als diejenigen Teile des Gasstromes, die durch die hierfür vorgesehenen Ausströmöffnungen der flexiblen Kammer in den Gassack selbst eingeleitet werden. Denn durch das Abströmen von Gas durch die Entlüftungsöffnung hindurch in die Umgebung soll ja das Aufblasen des Gassackes nicht verhindert sondern lediglich eine bessere Anpassung in einem oop-Fall ermöglicht werden.

Es können selbstverständlich mehrere Entlüftungsöffnungen in dem Gassack vorgesehen sein, unter denen sich auch "konventionelle" Entlüftungsöffnungen befinden können, zu denen das Gas nicht direkt aus der flexiblen Kammer strömt.

Die flexible Kammer selbst läßt sich zur Bildung eines in einem Airbagmodul verstaubaren Paketes gemeinsam mit dem Gassack zusammenfalten, wozu die flexible Kammer aus einem faltbaren Material gebildet wird. So kann die flexible Kammer aus einer Gewebelage oder mehreren miteinander verbunden Gewebelagen bestehen.

In einer bevorzugten Ausführungsform der Erfindung ist die flexible Kammer kanalförmig ausgebildet und weist zwei einander gegenüberliegende Ausströmöffnungen auf, durch die hindurch das Gas in den Gassack einströmen kann. Für eine definierte Steuerung des Gasstromes können die beiden Ausströmöffnungen eine unterschiedliche Größe aufweisen, so dass sich beispielsweise eine konische Formgebung der Kammer mit zwei stirnseitig angeordneten, unterschiedlichen Ausströmöffnungen ergibt.

In einer Weiterbildung der Erfindung ist die flexible Kammer derart angeordnet und ausgebildet, dass durch die beim Aufprall eines Insassen auf den Gassack induzierte sekundäre Gasströmung ein Abschnitt der flexiblen Kammer vor die mindestens eine Entlüftungsöffnung gelangt, um ein weiters Abströmen von Gas in die Umgebung zu reduzieren bzw. zu verhindern (je nach dem, ob die entsprechende Entlüftungsöffnung nur teilweise oder vollständig bedeckt ist). Hierdurch kann erreicht werden, dass nach dem Aufprall des Insassen auf den Gassack das Abströmen von Gas in die Umgebung wieder reduziert wird. Hierdurch soll ein zu schnelles Zusammenfallen des Gassackes vermieden werden.

Das Verschließen der Entlüftungsöffnung(en) durch die Wand der flexiblen Kammer wird zu Beginn des Aufblasens des Gassackes durch den stark erhöhten Druck innerhalb der flexiblen Kammer verhindert. Da der Druck innerhalb der flexiblen Kammer höher ist als in den übrigen Gassackbereichen außerhalb der flexiblen Kammer, wird eine Verformung der flexiblen Kammer, die zu einer Abdeckung der Entlüftungsöffnung(en) führen könnte, vermieden.

Darüberhinaus können auch zusätzliche (mechanische) Mittel vorgesehen sein, die einem Verschließen der Entlüftungsöffnung durch die flexible Kammer entgegenwirken. Diese Mittel sind vorzugsweise derart ausgebildet, dass bei Erreichen eines bestimmten Druckes innerhalb des Gassackes ein Verschließen der Entlüftungsöffnung nicht mehr behindert wird.

Die zusätzlichen Mittel können beispielsweise durch eine Reißnaht gebildet werden, über die der Gassack und die flexible Kammer miteinander verbunden sind und die beim Überschreiten einer vorgebbaren Belastung reißt. Erst hierdurch wird eine Verformung der flexiblen Kammer ermöglicht, die zu einem teilweisen oder vollständigen Verschließen der Entlüftungsöffnung(en) führen kann. Diese Belastung erfolgt durch eine entsprechende Krafteinleitung, hervorgerufen durch den Innendruck des Gassackes.

In einer anderen Ausführungsform werden die zusätzlichen Mittel durch ein längserstrecktes Verbindungsstück gebildet, das die flexible Kammer mit dem Gassack verbindet und über das die Position der flexiblen Kammer in Abhängigkeit von der Form (z. B. dem Entfaltungs- oder Intrusionszustand) des Gassackes sowie von dem Innendruck des Gassackes steuerbar ist.

Weitere Merkmale und Vorteile der Erfindung werden bei der nachfolgenden Beschreibung eines Ausführungsbeispiels anhand der Figuren deutlich werden.

Gemäß einer anderen Variante der Erfindung wird die einen flexiblen Diffusor bildende flexible Kammer der Airbaganordnung durch eine Mantelfläche aus flexiblem Material begrenzt, wobei in der Mantelfläche mindestens eine Lenkungsöffnung vorgesehen ist, durch die hindurch bei einem bestimmungsgemäßen Einbau der Airbaganordnung in ein Kraftfahrzeug Gas in einer Richtung weg von dem zu schützenden Fahrzeuginsassen in den Gassack eingeleitet werden kann.

Hierdurch wird verhindert, dass der Fahrzeuginsasse insbesondere in einem sogenannten oop-Fall, in dem sich der Fahrzeuginsasse außerhalb seiner normalen Sitzposition sehr dicht bei der Airbaganordnung befindet, durch den sich entfaltenden Gassack zu stark belastet und hierdurch verletzt werden könnte. Vielmehr "sucht" der sich entfaltende Gassack aufgrund der Leitung des Gasstromes in einer Richtung weg von dem zu schützenden Fahrzeuginsassen eine Lücke zwischen dem Insassen und der Fahrzeugumgebung, in der er sich entfalten kann.

Die in der vorgenannten Weise ausgestaltete Airbaganordnung eignet sich insbesondere zur Verwendung in einem Seitenairbagmodul, das zum Schutz eines Fahrzeuginsassen vor einem Aufprall auf die seitliche Karosserie eines Kraftfahrzeugs dient. Ein solches Seitenairbagmodul wird beispielsweise in einer Fahrzeugtür oder seitlich an einem Fahrzeugsitz angeordnet und untergebracht.

Die mindestens eine Lenkungsöffnung ist in der Mantelfläche des flexiblen Diffusors vorzugsweise so angeordnet, dass das durch sie hindurch in den aufzublasenden Gassack strömende Gas eine Komponente in Richtung auf die seitliche Fahrzeugkarosserie sowie eine Komponente entlang der seitlichen Fahrzeugkarosserien aufweist. Hierdurch kann erreicht werden, dass die Hauptentfaltungsebene des Gassackes sich im wesentlichen parallel zur seitlichen Fahrzeugkarosserie erstreckt und damit näherungsweise senkrecht zu der Wirkrichtung des Gassackes, die dem Aufprall eines Fahrzeuginsassen auf die seitliche Fahrzeugkarosserie entgegenwirkt.

Die Lenkungsöffnung selbst kann beispielsweise kreisförmig, mehreckig oder auch längserstreckt als Langloch ausgebildet sein und ist der seitlichen Kraftfahrzeugkarosserie vorzugsweise schräg zugewandt.

Je nach Bedarf können auch mehrere Lenkungsöffnungen in der Mantelfläche des flexiblen Diffusors vorgesehen sein. Darüber hinaus kann der flexible Diffusor an seinen axialen Enden jeweils eine weitere Austrittsöffnung aufweisen, durch die hindurch Gas senkrecht zur der Wirkrichtung des aufzublasenden Gassackes in diesen eingelassen werden kann. Der flexible Diffusor wird hierzu vorzugsweise entlang der vertikalen Fahrzeugachse in einem Kraftfahrzeug angeordnet.

Ein besonderer Vorteil der Erfindung liegt dabei darin, dass durch die Verringerung der Belastung eines Fahrzeuginsassen in einem oop-Fall das Schutzpotential der Airbaganordnung im Normalfall, d.h. bei einem in Normalposition befindlichen Fahrzeuginsassen, nicht eingeschränkt wird. Denn dieses Schutzpotential wird vor allem durch die Entlüftungsöffnungen im Gassack bestimmt, mit denen sich insbesondere die Entfaltungsgeschwindigkeit des Gassackes unter Normalbedingungen festlegen lässt. Durch die Möglichkeit, das Schutzpotential des Gassackes einerseits und dessen Verhalten in einem oop-Fall weitgehend unabhängig voneinander abzustimmen, ergibt sich eine größere Freiheit bei der Optimierung der entsprechenden Eigenschaften sowie eine Vereinfachung der Gassackentwicklung.

Der Fahrzeuginsasse wird also in einem oop-Fall durch den sich entfaltenden Gassack lediglich verdrängt, nicht aber direkt belastet.

Es zeigen:
- Fig. 1a -: eine Ansicht eines Gassackes für eine Airbaganordnung in teilweise aufgeschnittener Darstellung, wobei innerhalb des Gassackes eine durch eine flexible Hülle begrenzte flexible Kammer angeordnet ist;
- Fig. 1b -: einen Querschnitt durch die Darstellung gemäß Figur 1a;
- Fig. 2 -: den Gassack aus den Figuren 1a und 1b bei Aufprall eines Fahrzeuginsassen;
- Fig. 3 -: eine Abwandlung des Gassackes aus den Figuren 1a und 1b, wobei eine innerhalb des Gassackes angeordnete flexible Kammer teilweise durch die Hülle des Gassackes und teilweise durch eine innerhalb des Gassackes angeordnete flexible Hülle begrenzt wird;
- Fig. 4a -: einen sich entfaltenden Seitenairbag, wobei ein außerhalb seiner normalen Sitzposition befindliches Kind die Entfaltung behindert;
- Fig. 4b -: einen sich entfaltenden Seitenairbag, wobei ein außerhalb seiner normalen Sitzposition befindlicher Normalinsasse die Entfaltung behindert;
- Fig. 5a -: eine schematischen Darstellung einer Airbaganordnung mit einem Gassack, einer innerhalb des Gassackes angeordneten flexiblen Kammer in Form eines Diffusors, die in ihrer Mantelfläche eine Lenkungsöffnung aufweist, um den Gasstrom beim Aufblasen des Gassackes von dem zu schützenden Insassen wegzuleiten;
- Fig. 5b -: eine schematische Darstellung der Funktion der Airbaganordnung aus Figur 5a;
- Fig. 5c -: eine Vorderansicht eines neben der sich entfaltenden Airbaganordnung befindlichen Fahrzeuginsassen;
- Fig. 6a bis 6f -: unterschiedliche Ausführungsformen einer Lenkungsöffnung zur Verwendung bei einer Airbaganordnung gemäß den Figuren 5a bis 5c;
- Fig. 7a bis 7c -: eine schematische Darstellung des Zusammenwirkens des Gasgenerators der Airbaganordnung aus den Figuren 5a bis 5c mit der Lenkungsöffnung in dem flexiblen Diffusor.

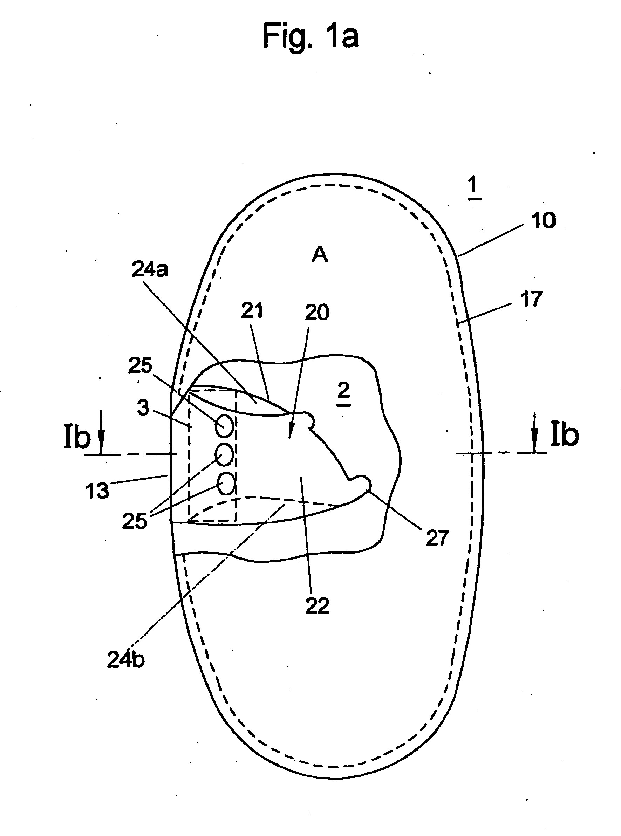

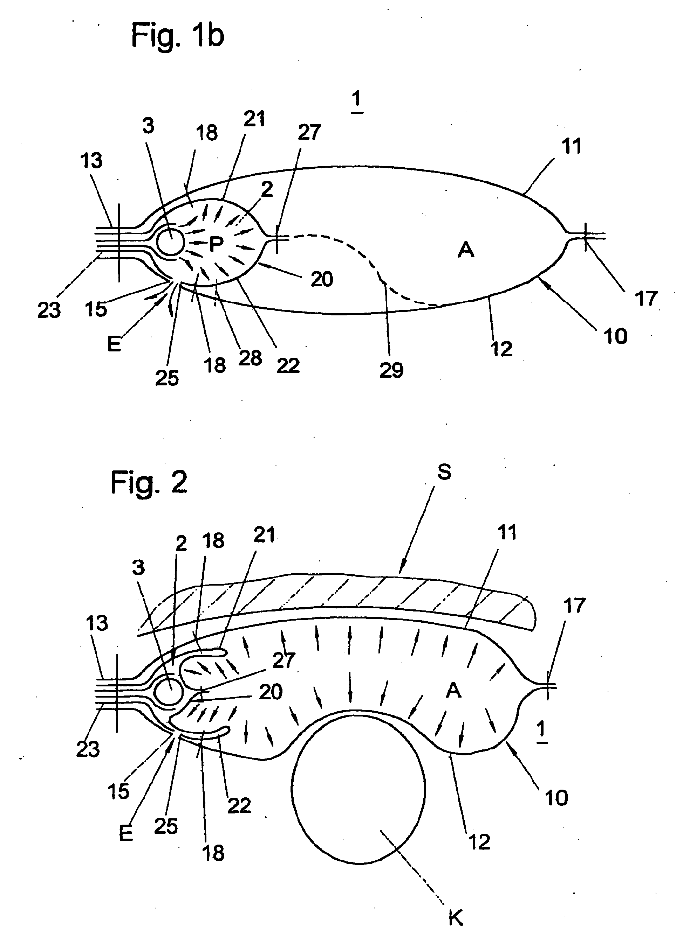

In den Figuren 1a und 1b ist ein Gassack 1 eines Airbagmodules im aufgeblasenen Zustand dargestellt. Der Gassack 1 wird gebildet durch eine Gassackhülle 10, die aus zwei entlang einer Naht 17 miteinander vernähten Gewebeplatten 11, 12 besteht.

Der Gassack 1 weist in der Hülle 10 eine Öffnung 13 auf, durch die hindurch ein Gasgenerator 3 in den Gassack 1 eingeführt ist. Der Gasgenerator dient zum Freisetzen eines Gases, durch das der Gassack 1 aufblasbar und in den in den Figuren 1a und 1b dargestellten, aufgeblasenen Zustand bringbar ist.

Der Gasgenerator 3 ist zusätzlich umschlossen von einer flexiblen Kammer 2, deren flexible Hülle 20 durch zwei entlang einer Naht 27 miteinander vernähte Gewebelagen 21, 22 gebildet wird. Die Kammer 2 bildet demnach eine Art inneren Gassack (flexiblen Diffusor), der den Gasgenerator 3 aufnimmt. Die flexible Kammer 2 weist eine mit der entsprechenden Öffnung 13 des Gassackes 1 korrespondierende Öffnung 23 zum Einführen des Gasgenerators 3 auf. Diese beiden Öffnungen 13, 23 sind im montierten Zustand des Gasgenerators, z. B. durch entsprechende Einspannbleche, verschlossen.

Die flexible Kammer 2 bildet einen Kanal, der an seinen beiden einander gegenüberliegenden Stirnseiten offen ist und dort Ausströmöffnungen 24a, 24b aufweist. Durch diese beiden Ausströmöffnungen 24a, 24b hindurch gelangen die aus dem Gasgenerator 3 in die flexible Kammer 2 (Diffusorkammer) strömenden Gase schließlich in die Arbeitskammer A des Gassackes 1.

Durch die flexible Kammer 2 wird um den Gasgenerator 3 herum ein (im Vergleich zum Volumen der Arbeitskammer A des Gassackes 1) erheblich verkleinertes und durch die Hülle 20 der flexiblen Kammer 2 begrenztes Volumen gebildet, was beim Einströmen der Gase aus dem Gasgenerator 3 einen entsprechend starken Druckanstieg zur Folge hat. Dieser Druck p wirkt auf die durch die Gewebelagen 21, 22 gebildete Hülle 20 der flexiblen Kammer 2.

Dies führt insbesondere auch zu einem erhöhten Druck (verglichen mit einem Gassack 1 ohne flexibler Kammer 2) im Bereich der Ausströmöffnungen 24a, 24b der flexiblen Kammer 2 und damit zu einer veränderten Strömungscharakteristik beim Befüllen des Gassackes 1. Diese Strömungscharakteristik kann ferner durch die Größe (den Querschnitt) der Ausströmöffnungen 24a, 24b beeinflußt werden. Vorliegend weißt die eine Ausströmöffnung 24a der flexiblen Kammer 2 einen kleineren Querschnitt auf als die andere, gegenüberliegende Ausströmöffnung 24b. Die flexible Kammer nimmt hierdurch bei im wesentlichen kreisförmiger Gestaltung der Ausströmöffnungen 24a, 24b eine konische Form an. Hiermit kann das Strömungsverhalten der in den Arbeitsraum A des Gassackes 1 einströmenden Gase gezielt so eingestellt werden, dass optimale Bedingungen im Hinblick auf den Schutz eines auf den Gassack 1 aufprallenden Fahrzeuginsassen gewährleistet sind. Insbesondere kann ein schnelles Befüllen des Gassackes in die für den Schutz eines Insassen besonders wichtigen Gassackbereiche erzielt werden.

Ferner kann mittels der flexiblen Kammer 2 auch eine Verstärkung des Gasstromes erreicht werden, der durch eine Entlüftungsöffnung E hindurch aus dem Gassack 1 in die Umgebung abströmt. Es ist bei einem Gassack für ein Airbagmodul grundsätzlich erforderlich, ein Abströmen der Gase nach dem Aufblasen des Gassackes zu ermöglichen. Im vorliegenden Fall soll durch eine gezielte Verstärkung dieses Effektes erreicht werden, dass der Gassack 1 trotz besonders schnellen Befüllens mit Gas nur eine möglichst geringe Gefahr für einen in Richtung auf den Gassack vorgebeugten bzw. seitlich gebeugten Fahrzeuginsassen darstellt.

Im Fall eines Seitenairbags, wie er in den Figuren 1a und 1b dargestellt ist, können derartige Probleme vor allem dann auftreten, wenn ein Fahrzeuginsasse sich im Bereich des Airbagmoduls an der Türverkleidung des entsprechenden Fahrzeugs anlehnt oder schlafend auf einem Rücksitz liegt. Dies gilt insbesondere für Kinder. In einem solchen Fall sollen durch das verstärkte Abströmen von Gas durch die Entlüftungsöffnung E hindurch die Geschwindigkeit der Entfaltung sowie das Endvolumen des Gassackes begrenzt werden, um die Verletzungsgefahr des Insassen durch den sich entfaltenden Gassack zu begrenzen.

Hierzu sind erfindungsgemäß in diesem Ausführungsbeispiel drei der Entlüftung dienenden Öffnungen 15 in der Hülle 10 des Gassackes 1 jeweils eine korrespondierende, der Entlüftung dienende Öffnung 25 in der Hülle 20 der flexiblen Kammer 2 zugeordnet. Die einander zugeordneten Öffnungen 15, 25 in der Hülle 10 des Gassackes 1 einerseits und der flexiblen Hülle 20 der Kammer 2 andererseits überdecken sich im aufgeblasenen Zustand der Kammer 2, so dass jeweils eine einheitliche Entlüftungsöffnung E gebildet wird, durch die hindurch Gas in die Umgebung abströmen kann.

Die der Entlüftung dienenden Öffnungen 25 in der Hülle 20 der flexiblen Kammer 2 weisen dabei jeweils einen um ein mehrfaches kleineren Querschnitt auf als die Ausströmöffnungen 24a, 24b.

Aufgrund des erhöhten Gasdruckes p innerhalb der flexiblen Kammer 2 wird die Strömung des Gases nach außen (verglichen mit einem Gassack 1 ohne flexible Kammer 2) verstärkt. Hierdurch kann, wie vorstehend ausgeführt, die Gefahr der Verletzung eines Fahrzeuginsassen bei der Kollision mit dem Gassack reduziert werden.

Entscheidend hierfür ist, dass die flexible Kammer 2 den unmittelbaren Ausströmbereich des Gasgenerators 3 begrenzt und somit eine lokale Druckerhöhung bewirkt und dass in der Hülle 20 der flexiblen Kammer 2 mindestens eine der Entlüftung dienende Öffnung 25 vorgesehen ist, die ein unmittelbares Abströmen des Gases in die Umgebung (durch eine korrespondierende Öffnung 15 in der Hülle des Gassackes 1 hindurch) ermöglicht, ohne dass das Gas zuvor durch die hierfür vorgesehenen Ausströmöffnungen 24a, 24b hindurch in den Arbeitsraum A des Gassackes 1 strömt.

Die Positionierung der einander zugeordneten Öffnungen 15, 25 wird dadurch erreicht, dass die Hülle 20 der flexiblen Kammer 2 im Bereich dieser Öffnungen 15, 25 mit der Hülle 10 des Gassackes 1 über Nähte 18 verbunden ist.

Um zu verhindern, dass sich die Standzeit des aufgeblasenen Gassackes 1 aufgrund des beschleunigten Abströmens von Gas in die Umgebung zu sehr verkürzt, also der Gassack zu schnell in sich zusammenfällt, kann die flexible Kammer 2 derart innerhalb des Gassackes 1 angeordnet und befestigt sein, dass durch die beim Aufprall eines Fahrzeuginsassen auf den Gassack 1 auftretende sekundäre Gasströmung die Hülle 20 der flexiblen Kammer 2 derart vor die der Entlüftung dienenden Öffnungen 15 in der Hülle 10 des Gassackes 1 geschoben wird, so dass diese Öffnungen 15 ganz oder teilweise verschlossen sind. Dies ist in Figur 2 erkennbar, wo der Aufprall des Körperteils K eines Fahrzeuginsassen auf den - vor einer Seitenstruktur S eines Fahrzeugs angeordneten - Gassack 1 und die damit einhergehenden Verformung des Gassackes 1 in dem entsprechenden Bereich der Hülle 10 dargestellt sind. Dies induziert innerhalb des Gassackes 1 eine Gasströmung (sogenannter Sekundär-Gasstrom), der zu der in Figur 2 dargestellten Verformung der Hülle 20 der flexiblen Kammer und damit zum Verschließen der Entlüftungsöffnungen E führt.

Zu Beginn des Aufblasens des Gassackes 1 (durch den aus dem Gasgenerator 3 austretenden Primär-Gasstrom) wird dieser Effekt dadurch vermieden, dass innerhalb der flexiblen Kammer 2 ein wesentlich größerer Druck herrscht als außerhalb dieser Kammer 2. Dies wirkt einer Verformung der Kammer durch einen Sekundär-Gasstrom entgegen.

Darüberhinaus kann auch vorgesehen sein, dass die Hülle 20 der flexiblen Kammer 2 über eine Reißnaht 28 oder eine sonstige Schwachstelle derart zusätzlich mit der Hülle 10 des Gassackes 1 verbunden ist, dass die in Figur 2 dargestellte Verformung der flexiblen Kammer 2 (die zum Verschließen der Entlüftungsöffnungen E führt) so lange unmöglich ist, wie die Reißnaht 28 (Schwachstelle) intakt ist. Erst wenn die Reißnaht bei einer bestimmten Belastung (ausgelöst beispielsweise durch einen bestimmten Innendruck des Gassackes) reißt, kann das anhand Figur 2 beschriebene Verschließen der Entlüftungsöffnungen E auftreten. Hierdurch ist sichergestellt, dass zu Beginn des Aufblasens des Gassackes 1 stets ein verstärktes Abströmen von Gas durch die Entlüftungsöffnungen E hindurch erfolgen kann, um die Entfaltungsgeschwindigkeit und das Entfaltungsvolumen des Gassackes zu begrenzen.

In einer alternativen Ausführungsform kann, wie anhand Figur 1b angedeutet, die flexible Kammer 2 über ein Verbindungselement 29, z. B. in Form eines Gewebelappens, zusätzlich mit der Hülle 10 des Gassackes 1 verbunden sein. Die Position der flexiblen Kammer 1 ist dann in Abhängigkeit von der Form des Gassackes gezielt steuerbar.

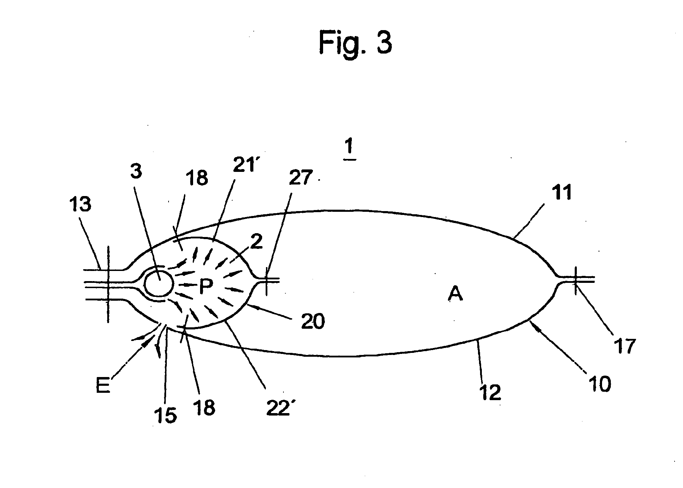

In Figur 3 ist eine Abwandlung des Gassackes aus den Figuren 1a bis 2b dargestellt, wobei der Unterschied darin besteht, dass die flexible Kammer 1 nicht vollständig durch die innerhalb des Gassackes angeordnete flexible Hülle 20 sondern teilweise durch die flexible Hülle 20 und teilweise durch die Hülle 10 des Gassackes 1 selbst gebildet wird.

Die beiden miteinander vernähten Gewebelagen 21', 22', die die flexible Hülle 20 bilden, sind dazu derart ausgebildet, dass sie die flexible Kammer 2 nur teilweise begrenzen, und dass die flexible Kammer im übrigen durch die beiden Gewebeplatten 11, 12 der Hülle 10 des Gassackes 1 begrenzt wird.

Dabei ist gemäß Figur 3 insbesondere vorgesehen, dass im Bereich der Entlüftungsöffnung E eine Platte 12 der Hülle 10 des Gassackes 1 die Begrenzungswand der flexiblen Kammer 2 bildet. Insofern wird hier die Entlüftungsöffnung E ausschließlich durch eine Öffnung 15 der Hülle 10 des Gassackes 1 gebildet.

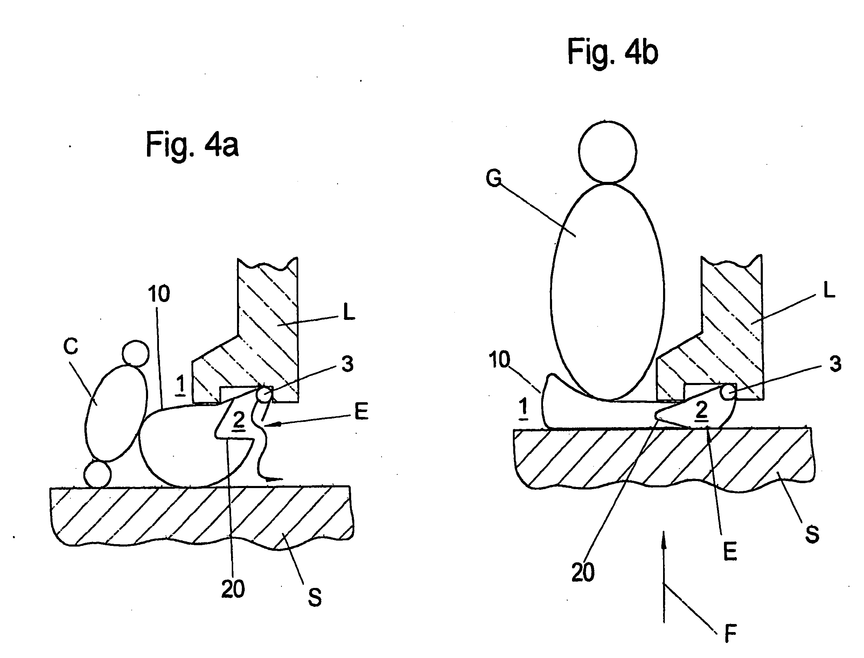

Die Figuren 4a und 4b zeigen eine mögliche Anordnung eines erfindungsgemäß ausgestalteten Gassackes 1 an einem Sitzteil, insbesondere einem Lehnenteil L eines Sitzes, und zwar auf einer der Seitenstruktur S (z.B. einer Türinnenverkleidung) zugewandten Seite des Kraftfahrzeugs.

Der Gassack 1 wird begrenzt durch eine Hülle 10 und weist in seinem Inneren eine flexible Kammer 2 auf, die teilweise durch eine innerhalb des Gassackes 1 angeordnete flexible Hülle 20 und teilweise durch die Hülle 10 des Gassackes 1 selbst begrenzt wird. Der flexiblen Kammer 2 ist eine Entlüftungsöffnung E zugeordnet, durch die hindurch aus dem Gasgenerator 3 in die flexible Kammer eintretendes Gas in die Umgebung abströmen kann. Die Entlüftungsöffnung E ist derart angeordnet, dass sie im aufgeblasenen Zustand des Gassackes 1 der Seitenstruktur S der Fahrzeugtür zugewandt ist.

Figur 4a zeigt einen aufgrund eines Crash-Falles aufgeblasenen Gassack 1 in einem Zustand, in dem dessen Entfaltung durch ein sich außerhalb seiner normalen Sitzposition befindliches, an die Seitenstruktur S angelehntes Kind C behindert wird. Hierdurch strömt verstärkt Gas durch die Entlüftungsöffnung E nach außen, um eine Verletzung des Kindes C durch den sich entfaltenden Gassack 1 zu verhindern.

Figur 4b zeigt einen Crash-Fall, bei dem der bereits entfaltete Gassack einen Insassen, der durch den seitlichen Anstoß bereits nach außen verlagert wurde, zurückhält. Ferner ist gemäß Figur 4b die Seitenstruktur S des Fahrzeugs durch bei einem Seitenaufprall S erzeugte Kräfte F nach innen (zum Fahrzeuginnenraum hin) verschoben. Hierdurch werden die der Seitenstruktur zugewandten Entlüftungsöffnungen E ganz oder teilweise verschlossen. Dadurch steht mehr Gas innerhalb des Luftsacks zur Rückhaltung des Insassen zur Verfügung.

In einem Crash-Fall, bei dem die Seitenstruktur des Kraftfahrzeugs in Richtung auf den Insassen verschoben wird, ist selbst bei einem außerhalb seiner normalen Sitzposition befindlichen Insassen ein schnelles Entfalten des Gassackes erwünscht, um eine Kollision des Insassen mit der Fahrzeugstruktur zu vermeiden.

Weitere Einzelheiten zu einer lastfallabhängigen Steuerung einer Entlüftungsöffnung einer Airbaganordnung sind in der DE 100 18 170 A1 beschrieben, auf die diesbezüglich vollinhaltlich Bezug genommen wird.

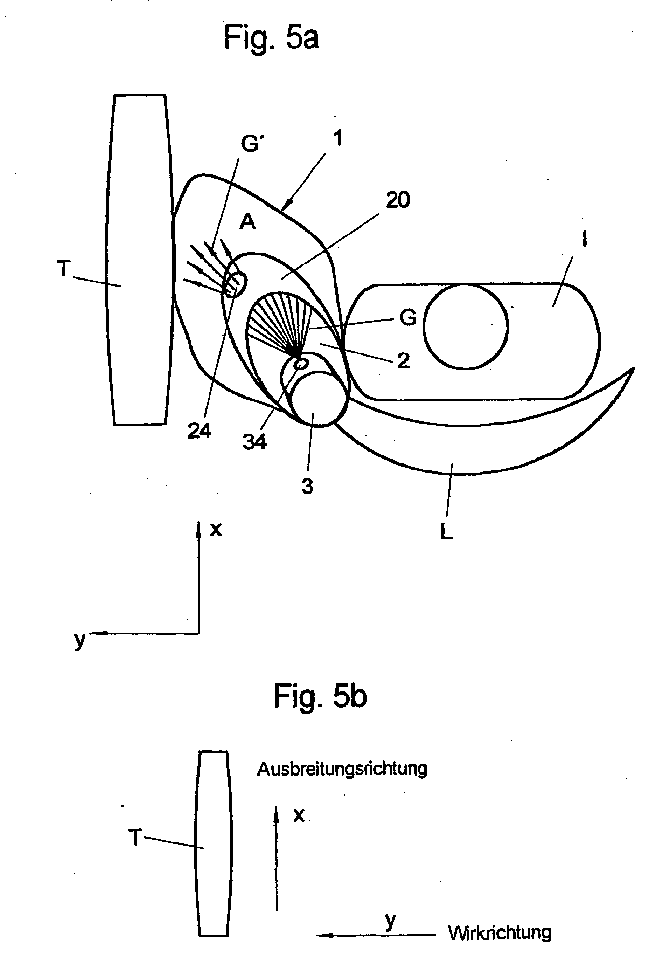

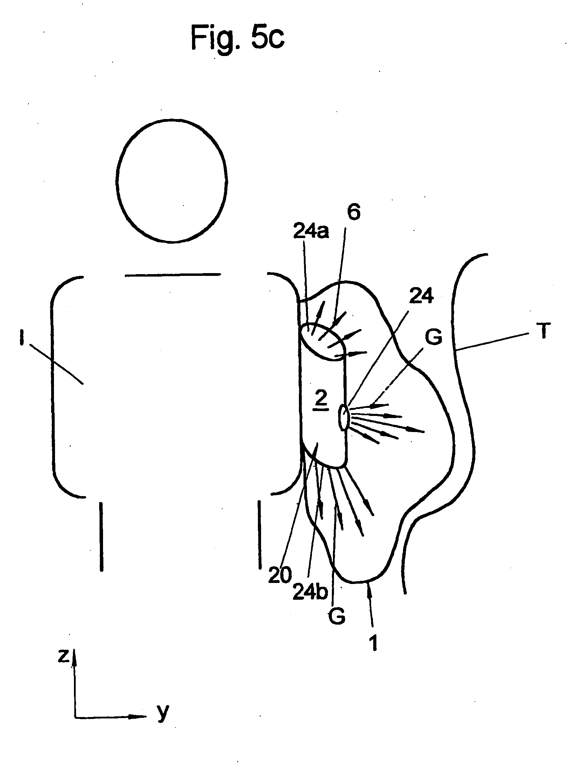

In den Figuren 5a und 5c ist schematisch ein Fahrzeuginsasse I dargestellt, der auf einem Fahrzeugsitz mit Rücklehne L Platz genommen hat und sich neben einem Teil der seitlichen Fahrzeugkarosserie, nämlich einer Fahrzeugtür T befindet. Zum Schutz dieses Fahrzeuginsassen vor einer Kollision mit Teilen der Fahrzeugtür T in einem Crash-Fall ist in der Rückenlehne L seitlich eine Airbaganordnung untergebracht, die einen Gassack 1, einen innerhalb des Gassackes 1 angeordneten Gasgenerator 3 zum Aufblasen des Gassackes 1 sowie eine den Gasgenerator 3 umschließende flexible Kammer in Form eines Diffusors 2 zur gezielten Einleitung des aus dem Gasgenerator 3 ausströmenden Gases G in den aufzublasenden Gassack 1 aufweist.

Der Diffusor 2 weist eine aus Gewebe bestehende, flexible, als Mantel mit einer im wesentlichen ovalen Grundfläche ausgebildete Hülle 20 auf, die an ihren beiden Deckflächen jeweils offen ist, also dort Austrittsöffnungen 24a, 24b bildet. Der flexible Diffusor 2 und der Gasgenerator 3 sind derart an der Rückenlehne L angeordnet, dass sie sich jeweils entlang der vertikalen Fahrzeugachse z erstrecken. Die aus den seitlichen Austrittsöffnungen 24a, 24b des Diffusors 2 austretenden Gase werden daher beim Einströmen in den Arbeitsraum A des Gassackes 1 im wesentlichen entlang der vertikalen Fahrzeugachse z nach oben bzw. unten gelenkt.

Zusätzlich ist zur Lenkung des aus dem Gasgenerator 3 austretenden Gasstromes in der einen Mantel bildenden Hülle 20 des flexiblen Diffusors 2 eine Lenkungsöffnung 24 vorgesehen, die schräg der Fahrzeugtür T der seitlichen Fahrzeugkarosserie zugewandt ist. Durch diese Lenkungsöffnung 24 hindurch wird der Gasstrom G derart in die Arbeitskammer A des aufzublasenden Gassackes 1 eingeleitet, dass der Gasstrom eine Komponente in einer Richtung y entlang der Fahrzeugquerachse (quer zur Fahrzeuglängsrichtung x sowie quer zur vertikalen z verlaufenden Achse) sowie eine Komponente in Fahrzeuglängsrichtung x (entsprechend der Fahrtrichtung) aufweist. Der aus dieser Lenkungsöffnung 24 austretende Gasstrom G weist somit eine Richtung weg von dem zu schützenden Fahrzeuginsassen I auf und unterstützt gleichzeitig eine Entfaltung des aufzublasenden Gassackes 1 in Fahrzeuglängsrichtung x nach vorne. Insgesamt wird durch die seitlichen Austrittsöffnungen 24a, 24b und die zusätzliche Lenkungsöffnung 24 des flexiblen Diffusors 2 erreicht, dass sich der Gassack 1 im wesentlichen in einer Ebene parallel zur Türebene T entfaltet, und somit senkrecht zu der Wirkrichtung des aufgeblasenen Gassackes 1, der einen Zusammenprall des Fahrzeuginsassen I in Fahrzeugquerichtung y mit der der Fahrzeugtür 1 verhindern soll. Hierbei wird insbesondere vermieden, dass der aus dem Diffusor 2 in den aufzublasenden Gassack 1 geleitete Gasstrom G eine Komponente in Richtung auf den zu schützenden Fahrzeuginsassen aufweist, die insbesondere in einem oop-Fall zur Verletzung des Fahrzeuginsassen durch den sich in Richtung auf den Fahrzeuginsassen entfaltenden Gassack führen könnte.

Vielmehr ist gemäß den Figuren 5a und 5c der Gasgenerator 3 mit dem Diffusor 2 im seitlichen Bereich der Rückenlehne L unmittelbar neben dem zu schützenden Fahrzeuginsassen angeordnet und die Entfaltung des Gassackes 1 erfolgt zwischen dem Fahrzeuginsassen I und der Fahrzeugtür T im wesentlichen parallel zur Türebene mit einer zusätzlichen Komponente weg von dem Fahrzeuginsassen hin zu der Fahrzeugtür T. Eine unmittelbare Entfaltung des Gassackes 1 in Richtung auf den zu schützenden Fahrzeuginsassen wird hierdurch vermieden, und zwar einerseits durch die vorgeschriebene Entfaltungsrichtung des Gassackes 1 und andererseits durch die Anordnung des Gasgenerators 3 mit dem flexiblen Diffusor 2, die den Fahrzeuginsassen teilweise gegenüber dem sich entfaltenden Gassack abschirmen.

Der sich entfaltende Gassack 1 "sucht" bei der in den Figuren 5a bis 5c beschriebenen Anordnung einer Lücke zwischen dem Fahrzeuginsassen I und der Fahrzeugtür T, in der er sich entfalten kann, wobei jedoch eine unmittelbare Entfaltung des Gassackes in Richtung auf den Fahrzeuginsassen I verhindert wird. Vielmehr würde der Fahrzeuginsasse in einem oop-Fall, in dem er sich beim Auslösen der Airbaganordnung außerhalb seiner normalen Sitzposition zu dicht bei der Fahrzeugtür T befindet, durch den sich entfaltenden Gassack 1 lediglich verdrängt, ohne unmittelbar von diesem angeschossen zu werden.

Diese Funktion der in den Figuren 5a und 5c dargestellten Airbaganordnung wird durch Figur 5b veranschaulicht. Der Gassack 1 breitet sich beim Aufblasen im wesentlichen in der Türebene, d.h. in Fahrzeuglängsrichtung x sowie entlang der vertikalen Fahrzeugachse z aus. Diese Hauptausbreitungsrichtung steht senkrecht zu der Wirkrichtung des Gassackes, die einen Aufprall des Fahrzeuginsassen i auf die Fahrzeugtür T entlang der Fahrzeugquerachse y verhindern soll. Die Ausbreitung des Gassackes beim Entfalten senkrecht zu der vorstehend beschriebenen Hauptentfaltungsebene (x-z-Ebene) wird hierbei dadurch vermieden, dass eine Entfaltung des Gassackes 1 hin zu dem Fahrzeuginsassen I aufgrund der vorbeschriebenen Lenkung des Gasstromes G mittels des Diffusors 2 im wesentlichen ausgeschlossen ist. In entgegengesetzter Richtung, nämlich hin zu der Fahrzeugtür T, ist eine stärkere Entfaltung des Gassackes durch die räumlichen Platzverhältnisse begrenzt, da sich die seitlichen Bereiche der Rückenlehne eines Kraftfahrzeugsitzes dicht neben der jeweiligen seitlichen Fahrzeugtür befinden.

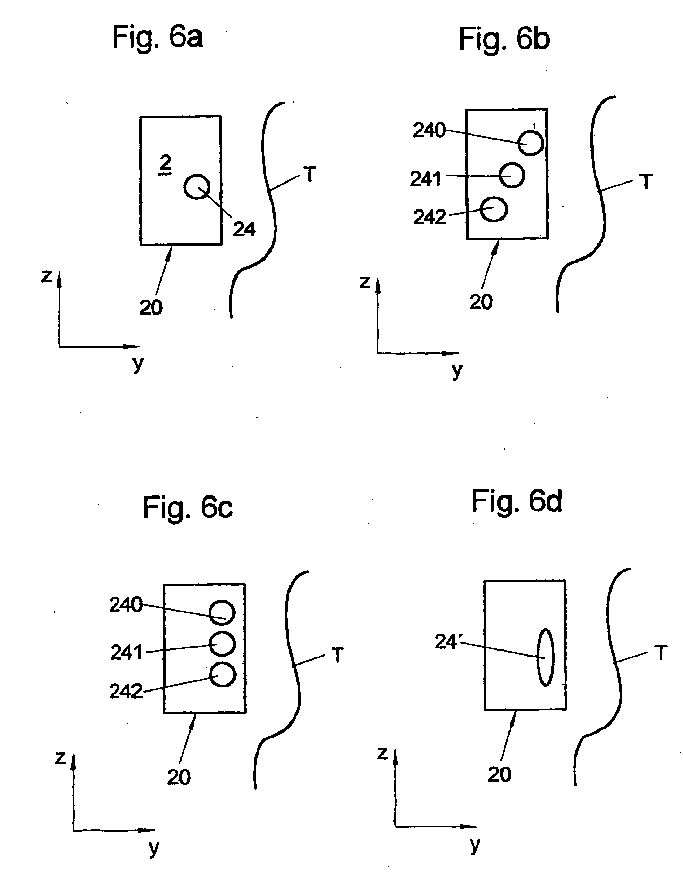

In den Figuren 6a bis 6f sind unterschiedliche Anordnungen einer oder mehrerer Lenkungsöffnungen an der mantelförmigen Hülle 20 des Diffusors 2 dargestellt, und zwar jeweils in einer nicht perspektivischen Ansicht von der Vorderseite eines Kraftfahrzeugs her gesehen.

In Figur 6a ist dabei die Anordnung einer Lenkungsöffnung gemäß dem Ausführungsbeispiel der Figuren 5a und 5c in einer Vorderansicht gezeigt.

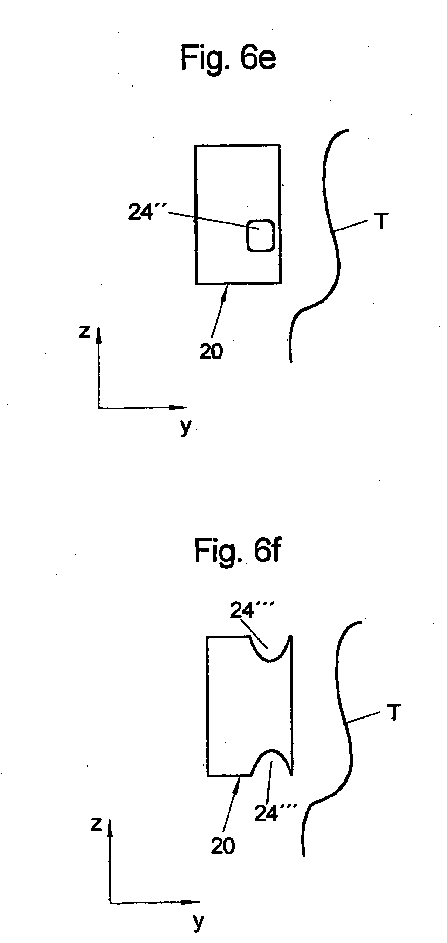

Bei dem Ausführungsbeispiel gemäß Figur 6b sind insgesamt drei Lenkungsöffnungen 240, 241, 242 entlang der vertikalen Fahrzeugachse z übereinander und dabei in Richtung der Fahrzeugquerachse y zueinander versetzt in der Hülle 20 des Diffusors angeordnet. Bei dem Ausführungsbeispiel gemäß Figur 6 sind die drei Lenkungsöffnungen 240, 241, 242 entlang der vertikalen Fahrzeugachse z unmittelbar übereinander angeordnet. In beiden Fällen wird durch die Mehrzahl an Lenkungsöffnungen 240, 241, 242 gegenüber dem Ausführungsbeispiel aus Figur 6a erreicht, dass der aus dem Gasgenerator stammende Gasstrom verstärkt in einer Richtung schräg nach vorne zur Tür T hingeleitet wird. Dies lässt sich gemäß dem Ausführungsbeispiel aus Figur 6d auch dadurch erreichen, dass die Lenkungsöffnung 24' als Langloch ausgebildet ist, das sich entlang der vertikalen Fahrzeugachse z erstreckt.

In Figur 6e ist eine Lenkungsöffnung 24'' mit rechteckigem Öffnungsquerschnitt dargestellt.

Figur 6f zeigt eine flexible Hülle 20 eines Diffusors, bei der zwei Lenkungsöffnungen 24''' an den axialen Enden der flexiblen Hülle 20 vorgesehen sind, wobei diese Lenkungsöffnungen 24'' unmittelbar in die seitlichen Austrittsöffnungen 24a, 24b (vergleiche Figur 5c) übergehen.

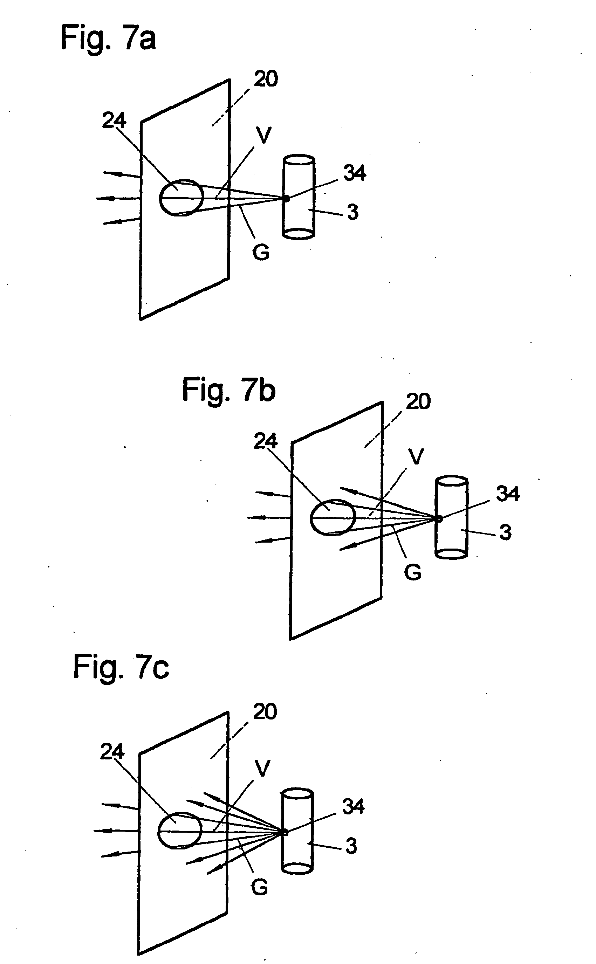

Anhand der Figur 7a bis 7c wird deutlich, dass die Gaslenkungsöffnung (en) 24 in der Mantelfläche 20 des Diffusors zugleich als Filter bezüglich der Ausbreitungsgeschwindigkeit des Gasstromes G wirken können und der herstellungsbedingten Streuung des aus dem Gasgenerator austretenden Gasstromes G entgegenwirken. Die in den Figuren 7a bis 7c jeweils dargestellte Gaslenkungsöffnung 24 lässt nur denjenigen Teil des Gasstromes G zum unmittelbaren Eintritt in den aufzublasenden Gassack passieren, der innerhalb eines bestimmten Raumwinkels um die direkte Verbindungslinie V zwischen der entsprechenden Austrittsöffnung 34 des Gasgenerators 3 und dem Mittelpunkt der Lenkungsöffnung 24 verläuft.

## Patentansprüche

1. Airbaganordnung mit
- einem Gassack,
- einem Gasgenerator zum Aufblasen des Gassackes,
- einer innerhalb des Gassackes angeordneten flexiblen Kammer, in die das aus dem Gasgenerator ausströmende Gas eintritt und die mindestens eine Ausströmöffnung aufweist, durch die hindurch das Gas in den Gassack geleitet wird, um diesen zum Schutz eines Fahrzeuginsassen aufzublasen, und
- mindestens einer Entlüftungsöffnung, durch die hindurch Gas aus dem Gassack in die Umgebung abströmen kann, wobei die flexible Kammer durch eine Mantelfläche aus flexiblem Material begrenzt ist,
**dadurch gekennzeichnet, dass**
in der Mantelfläche (20) mindestens eine von der Ausströmöffnung verschiedene Lenkungsöffnung (24) vorgesehen ist, durch die hindurch Gas (G) zur Unterstützung der Entfaltung des Gassacks (1) in einer Richtung weg von dem zu schützenden Fahrzeuginsassen (I) in den Gassack (1) derart einleitbar ist, dass ein Entfalten des Gassacks (1) in Richtung auf den Fahrzeuginsassen (I) vermieden wird.

2. Airbaganordnung nach Anspruch 1, **dadurch gekennzeichnet, dass** die Airbaganordnung als Bestandteil eines Seitenairbagmoduls zum Schutz eines Insassen vor einem Aufprall auf die seitliche Karosserie (S, T) eines Kraftfahrzeugs ausgebildet ist.

3. Airbaganordnung nach Anspruch 2, **dadurch gekennzeichnet, dass** die Lenköffnung (24) zur Einleitung des Gases (G) in einer Richtung angeordnet und ausgebildet ist, die eine Komponente in Richtung (y) auf die seitliche Karosserie (T) aufweist.

4. Airbaganordnung nach Anspruch 2 oder 3, **dadurch gekennzeichnet, dass** die Lenköffnung (24) zur Einleitung des Gases (G) in einer Richtung angeordnet und ausgebildet ist, die eine Komponente in Fahrzeuglängsrichtung (x) aufweist.

5. Airbaganordnung nach einem der vorhergehenden Ansprüche, **dadurch gekennzeichnet, dass** die Hauptentfaltungsebene des Gassackes (1) im wesentlichen quer zu der Richtung (y) verläuft, entlang der der Gassack (1) einem Aufprall des Fahrzeuginsassen (I) entgegenwirkt.

6. Airbanordnung nach einem der vorhergehenden Ansprüche, **dadurch gekennzeichnet, dass** die Lenköffnung (24, 24', 24") kreisförmig, als Langloch oder vieleckig ausgebildet ist.

7. Airbaganordnung nach einem der vorhergehenden Ansprüche, **dadurch gekennzeichnet, dass** die Lenkungsöffnung (24) der seitlichen Kraftfahrzeugkarosserie (T) schräg zugewandt ist.

8. Airbaganordnung nach einem der vorhergehenden Ansprüche **dadurch gekennzeichnet, dass** mehrere Lenkungsöffnungen (240, 241, 242) in der Mantelfläche (20) der Kammer (2) vorgesehen sind.

9. Airbaganordnung nach einem der vorhergehenden Ansprüche, **dadurch gekennzeichnet, dass** die flexible Kammer (2) an den axialen Enden ihrer Mantelfläche (20) jeweils eine Austrittsöffnung (24a, 24b) aufweist.

10. Airbaganordnung nach Anspruch 9, **dadurch gekennzeichnet, dass** die Austrittsrichtung des Gases (G) aus den Austrittsöffnungen (24a, 24b) im wesentlichen quer zu der Richtung (y) verläuft, entlang der der Gassack (1) einem Aufprall des Fahrzeuginsassen (I) entgegenwirkt.

11. Airbaganordnung nach Anspruch 2 und 10, **dadurch gekennzeichnet, dass** der Austritt der Gase (G) aus den Austrittsöffnungen (24a, 24b) entlang der seitlichen Kraftfahrzeugkarosserie (T) erfolgt.

12. Airbaganordnung nach einem der vorhergehenden Ansprüche, **dadurch gekennzeichnet, dass** die flexible Kammer (2) für einen derartigen Einbau in ein Kraftfahrzeug vorgesehen ist, dass sie sich entlang der vertikalen Fahrzeugachse (z) erstreckt.

13. Airbaganordnung nach einem der vorhergehenden Ansprüche, **dadurch gekennzeichnet, dass** die Entlüftungsöffnung (E) derart angeordnet ist, dass Gas aus der flexiblen Kammer (2) zu der Entlüftungsöffnung (E) gelangen kann, ohne die Ausströmöffnungen (24a, 24b) der flexiblen Kammer (2) zu passieren.

14. Airbaganordnung nach einem der vorhergehenden Ansprüche, **dadurch gekennzeichnet, dass** aus dem Gasgenerator (3) in die flexible Kammer (2) eintretendes Gas durch die Entlüftungsöffnung (E) abströmt, ohne zuvor in einen außerhalb der flexiblen Kammer (2) gelegenen Bereich (A) des Gassackes (1) geströmt zu sein.

15. Airbaganordnung nach einem der vorhergehenden Ansprüche, **dadurch gekennzeichnet, dass** die flexible Kammer (2) durch eine innerhalb des Gassackes (1) angeordnete flexible Hülle (20) gegenüber den übrigen Bereichen (A) innerhalb des Gassackes (1) abgegrenzt ist.

16. Airbaganordnung nach Anspruch 15, **dadurch gekennzeichnet, dass** die Wand der flexiblen Kammer ausschließlich durch die innerhalb des Gassackes (1) angeordnete flexible Hülle (20) gebildet wird.

17. Airbaganordnung nach Anspruch 15, **dadurch gekennzeichnet, dass** die Wand der flexiblen Kammer teilweise durch die innerhalb des Gassackes (1) angeordnete flexible Hülle (20) und teilweise durch die Hülle (10) des Gassackes (1) gebildet wird.

18. Airbaganordnung nach einem der vorhergehenden Ansprüche, **dadurch gekennzeichnet, dass** die flexible Kammer (2) gemeinsam mit dem Gassack (1) zusammenfaltbar ist.

19. Airbaganordnung nach einem der vorhergehenden Ansprüche, **dadurch gekennzeichnet, dass** die flexible Kammer (2) durch mindestens eine Gewebelage (21,22) gebildet wird.

20. Airbaganordnung nach einem der vorhergehenden Ansprüche, **dadurch gekennzeichnet, dass** die flexible Kammer (2) zwei Ausströmöffnungen (24a, 24b) aufweist, durch die hindurch Gas aus der flexiblen Kammer (2) in weitere Bereiche (A) des Gassackes (1) gelangt.

21. Airbaganordnung nach Anspruch 20, **dadurch gekennzeichnet, dass** die beiden Ausströmöffnungen (24a, 24b) einander gegenüberliegende Stirnseiten der flexiblen Kammer (2) bilden.

22. Airbaganordnung nach Anspruch 20 oder 21, **dadurch gekennzeichnet, dass** die beiden Ausströmöffnungen (24a, 24b) unterschiedlich große Querschnittsflächen aufweisen.

23. Airbaganordnung nach einem der vorhergehenden Ansprüche, **dadurch gekennzeichnet, dass** die flexible Kammer (2) einen Führungskanal für die aus dem Gasgenerator (3) austretenden Gase bildet.

24. Airbaganordnung nach einem der vorhergehenden Ansprüche, **dadurch gekennzeichnet, dass** der Gassack (1) derart innerhalb eines Kraftfahrzeugs angeordnet ist, dass die Entlüftungsöffnung (E) beim Aufblasen des Gassackes (1) in Richtung auf ein Strukturelement (S) des Fahrzeugs weist und bei einer Crash-bedingten Verschiebung des Strukturelementes (S) durch dieses ganz oder teilweise verschließbar ist.

## Claims

1. Airbag arrangement having
- a gas bag,
- a gas generator for inflating the gas bag,
- a flexible chamber disposed within the gas bag, into which the gas issuing from the gas generator enters and which has at least one outlet opening through which the gas is led into the gas bag in order to inflate it to protect a vehicle occupant, and
- at least one vent opening through which gas can flow out of the gas bag into the environment, wherein the flexible chamber is defined by a peripheral surface of flexible material,
**characterized in that**
in the peripheral surface (20) at least one steering opening (24) which is different from the outlet opening is provided through which gas can be introduced into the gas bag to support the deployment of the gas bag (1) in a direction away from the vehicle occupant (I) in such a manner that a deployment of the gas bag (1) toward the occupant (I) is thereby prevented.

2. Airbag arrangement according to claim 1, **characterized in that** the airbag arrangement is configured as a component of a side airbag module for protecting an occupant against colliding with the lateral body (S, T) of a motor vehicle.

3. Airbag arrangement according to claim 2, **characterized in that** the steering opening (24) is arranged and configured for introducing the gas (G) in a direction which has a component in direction (y) against the lateral body (T).

4. Airbag arrangement according to claim 2 or 3, **characterized in that** the steering opening (24) is arranged and configured for introducing the gas (G) in a direction which has a component in the longitudinal direction (x) of the motor vehicle.

5. Airbag arrangement according to any one of the preceding claims, **characterized in that** the principal depleyment plane of the gas bag (1) extends substantially across the direction (y) along which the gas bag (1) counteracts a collision of the vehicle occupant (I).

6. Airbag arrangement according to any one of the preceding claims, **characterized in that** the steering opening (24, 24', 24") is made circular, slot-shaped or polygonal.

7. Airbag arrangement according to any one of the preceding claims, **characterized in that** the steering opening (24) is turned at an angle to the lateral body (T) of the vehicle.

8. Airbag arrangement according to any one of the preceding claims, **characterized in that** a plurality of steering openings (240, 241, 242) are provided in the circumferential surface (20) of the chamber (2).

9. Airbag arrangement according to any one of the preceding claims, **characterized in that** the flexible chamber (2) has an outlet opening (24a, 24b) at each of the axial ends of its circumferential surface (20).

10. Airbag arrangement according to claim 9, **characterized in that** the outlet direction of the gas (G) from the outlet openings (24a, 24b) is substantially across the direction (y) along which the gas bag (1) opposes a collision from the vehicle occupant (I).

11. Airbag arrangement according to claim 2 and 10, **characterized in that** the exit of the gases (G) from the outlet openings (24a, 24b) takes place along the lateral motor vehicle body (T).

12. Airbag arrangement according to any one of the preceding claims, **characterized in that** the flexible chamber (2) is provided for such installation in a motor vehicle that it extends along the vertical axis (z) of the vehicle.

13. Airbag arrangement according to any one of the preceding claims, **characterized in that** the vent opening (E) is disposed such that gas from the flexible chamber (2) can arrive at the vent opening (E) without passing through the outlet openings (24a, 24b) of the flexible chamber (2).

14. Airbag arrangement according to any one of the preceding claims, **characterized in that** gas from the gas generator (3) entering into the flexible chamber (2) flows out through the vent opening without first having flowed into an area (A) of the gas bag (1) that is situated outside of the flexible chamber (2).

15. Airbag arrangement according to any one of the preceding claims, **characterized in that** the flexible chamber (2) is delimited by a flexible envelope (20) disposed within the gas bag (1) against the other areas (A) within the gas bag (1).

16. Airbag arrangement according to claim 15, **characterized in that** the wall of the flexible chamber is formed exclusively by the flexible envelope (2) disposed within the gas bag (1).

17. Airbag arrangement according to claim 15, **characterized in that** the wall of the flexible chamber is formed partially by the flexible envelope (20) disposed within the gas bag (1) and partially by the envelope (10) of the gas bag (1).

18. Airbag arrangement according to any one of the preceding claims, **characterized in that** the flexible chamber (2) is foldable together with the gas bag (1).

19. Airbag arrangement according to any one of the preceding claims, **characterized in that** the flexible chamber (2) is formed by at least one fabric layer (21, 22).

20. Airbag arrangement according to any one of the preceding claims, **characterized in that** the flexible chamber (2) has two outlet openings (24a, 24b) through which gas passes from the flexible chamber (2) into additional areas (A) of the gas bag (1).

21. Airbag arrangement according to claim 20, **characterized in that** the two outlet openings (24a, 24b) form opposite front sides of the flexible chamber (2).

22. Airbag arrangement according to claim 20 or 21, **characterized in that** the two outlet openings (24a, 24b) have cross sectional areas of different size.

23. Airbag arrangement according to any one of the preceding claims, **characterized in that** the flexible chamber (2) forms a guiding channel for the gases issuing from the gas generator (3).

24. Airbag arrangement according to any one of the preceding claims, **characterized in that** the gas bag (1) is arranged within a motor vehicle such that the vent opening (E) points during inflation of the gas bag (1) toward a structural element (S) of the motor vehicle and in the case of a collision-caused displacement of the structural element (S) can be wholly or partially closed by the latter.

## Revendications

1. Agencement d'airbag comprenant
- un sac de gaz (1),
- un générateur de gaz (3) servant à gonfler le sac de gaz (1),
- une chambre flexible (2) disposée à l'intérieur du sac de gaz (1), dans laquelle le gaz s'écoulant hors du générateur de gaz pénètre (3) et qui présente au moins une ouverture de sortie d'écoulement (24a, 24b) à travers laquelle le gaz est dirigé dans le sac de gaz (1) pour gonfler celui-ci pour la protectin d'un passager du véhicule (I), et
- au moins une ouverture d'aération (E) à travers laquelle du gaz issu du sac de gaz (1) peut s'écouler dans l'environnement,
la chambre flexible (2) étant délimitée par une surface d'enveloppe (20) d'un matériau flexible,
**caractérisé en ce que** dans la surface d'enveloppe (20) est prévue au moins une ouverture de direction (24) différente de l'ouverture de sortie d'écoulement (24a, 24b), ouverture de guidage (24) à travers laquelle du gaz (G) pouvant être versé dans le sac de gaz (1) pour soutenir le déploiement du sac de gaz (1) dans une direction à l'opposé du passager du véhicule (I) à protéger de sorte qu'un déploiement du sac de gaz (1) en direction dans une direction vers le passager du véhicule (I) est évité.

2. Agencement d'airbag selon la revendication 1, **caractérisé en ce que** l'agencement d'airbag est une composante d'un module d'airbag latéral pour protéger un passager d'un choc sur la carrosserie latérale (S, T) d'un véhicule automobile.

3. Agencement d'airbag selon la revendication 2, **caractérisé en ce que** l'ouverture de direction (24) est disposée et formée pour introduire le gaz (G) dans une direction qui présente une composante en direction (y) de la carrosserie latérale (T).

4. Agencement d'airbag selon la revendication 2 ou 3, **caractérisé en ce que** l'ouverture de direction (24) est disposée et formée pour introduire le gaz (G) dans une direction qui présente une composante dans la direction longitudinale du véhicule (x).

5. Agencement d'airbag selon l'une quelconque des revendications précédentes, **caractérisé en ce que** le plan de déploiement principal du sac de gaz (1) est essentiellement transversal à la direction (y), le long de laquelle le sac de gaz (1) s'oppose à un impact du passager du véhicule automobile (1).

6. Agencement d'airbag selon l'une quelconque des revendications précédentes, **caractérisé en ce que** l'ouverture de direction (24, 24', 24") est circulaire, oblongue ou polygonale.

7. Agencement d'airbag selon l'une quelconque des revendications précédentes, **caractérisé en ce que** l'ouverture de direction (24) est tournée de manière oblique contre la carrosserie latérale du véhicule automobile (T).

8. Agencement d'airbag selon l'une quelconque des revendications précédentes, **caractérisé en ce que** plusieurs ouvertures de direction (240, 241, 242) sont prévues dans la surface d'enveloppe (20) de la chambre (2).

9. Agencement d'airbag selon l'une quelconque des revendications précédentes, **caractérisé en ce que** la chambre flexible (2) présente une ouverture de sortie d'écoulement (24a, 24b) respective sur les extrémités axiales de sa surface d'enveloppe (20).

10. Agencement d'airbag selon la revendication 9, **caractérisé en ce que** la direction de sortie d'écoulement du gaz (G) depuis les sorties d'écoulement (24a, 24b) est essentiellement transversale à la direction (y), le long de laquelle le sac de gaz (1) s'oppose à un impact du passager du véhicule (1).

11. Agencement d'airbag selon la revendication 2 et 10, **caractérisé en ce que** la sortie du gaz (G) des ouvertures de sortie d'écoulement (24a, 24b) s'effectue le long de la carrosserie latérale du véhicule automobile (T).

12. Agencement d'airbag selon l'une quelconque des revendications précédentes, **caractérisé en ce que** la chambre flexible (2) est prévue pour une intégration dans un véhicule automobile de façon à ce qu'elle s'étende le long de l'axe vertical du véhicule (Z).

13. Agencement d'airbag selon l'une quelconque des revendications précédentes, **caractérisé en ce que** l'ouverture d'aération (E) est disposée de sorte que le gaz issu de la chambre flexible (2) peut arriver vers l'ouverture d'aération (E), sans passer par lesouvertures de sortie d'écoulement (24a, 24b) de la chambre flexible (2).

14. Agencement d'airbag selon l'une quelconque des revendications précédentes, **caractérisé en ce que** le gaz issu du générateur de gaz (3) entrant dans la chambre flexible (2) est évacué par l'ouverture d'aération (E) sans être passé d'abord dans une zone (A) du sac de gaz (1) placée en-dehors de la chambre flexible (2).

15. Agencement d'airbag selon l'une quelconque des revendications précédentes, **caractérisé en ce que** la chambre flexible (2) est délimitée par une enveloppe flexible (20) disposée à l'intérieur du sac de gaz (1) par rapport aux autres zones (A) à l'intérieur sac de gaz (1).

16. Agencement d'airbag selon la revendication 15, **caractérisé en ce que** la paroi de la chambre flexible est formée exclusivement par l'enveloppe flexible (20) disposée à l'intérieur du sac de gaz (1).

17. Agencement d'airbag selon la revendication 15, **caractérisé en ce que** la paroi de la chambre flexible est formée partiellement par l'enveloppe flexible (20) disposée à l'intérieur du sac de gaz (1) et partiellement par l'enveloppe (10) du sac de gaz (1).

18. Agencement d'airbag selon l'une quelconque des revendications précédentes, **caractérisé en ce que** la chambre flexible (2) peut être repliée ensemble avec le sac de gaz (1).

19. Agencement d'airbag selon l'une quelconque des revendications précédentes, **caractérisé en ce que** la chambre flexible (2) est formée par au moins une couche de tissu (21, 22).

20. Agencement d'airbag selon l'une quelconque des revendications précédentes, **caractérisé en ce que** la chambre flexible (2) présente deux ouvertures de sortie d'écoulement (24a, 24b) à travers lesquelles du gaz arrive de la chambre flexible (2) dans d'autres zones (A) du sac de gaz (1).

21. Agencement d'airbag selon la revendication 20, **caractérisé en ce que** les deux ouvertures de sortie d'écoulement (24a, 24b) forment des faces frontales se faisant face de la chambre flexible (2).

22. Agencement d'airbag selon la revendication 20 ou 21, **caractérisé en ce que** les deux ouvertures de sortie d'écoulement (24a, 24b) présentent des faces transversales de différente grosseur.

23. Agencement d'airbag selon l'une quelconque des revendications précédentes, **caractérisé en ce que** la chambre flexible (2) forme un canal de guidage pour les gaz sortant du générateur de gaz (3).

24. Agencement d'airbag selon l'une quelconque des revendications précédentes, **caractérisé en ce que** le sac de gaz (1) est disposé de telle manière à l'intérieur d'un véhicule automobile, que l'ouverture d'aération (E) est orientée en direction d'un élément structurel (S) du véhicule automobile lorsque le sac de gaz (1) est gonflé et lors d'un déplacement de l'élément structurel (S) dû à un accident peut être fermée en totalité ou partiellement par celui-ci.
